# EUROPÄISCHE PATENTANMELDUNG

(11) **EP 0 865 948 A2**
(43) Veröffentlichungstag der Anmeldung: **23.09.1998**
(21) Anmeldenummer: 98100520.0
(22) Anmeldetag: 14.01.1998
(51) Int. Cl.: B60J 7/04

(54) **Schiebedachanordnung an einem Personenkraftwagen**

(30) Priorität: 17.03.1997 DE 19710980
(71) Anmelder: Bayerische Motoren Werke Aktiengesellschaft, 80788 München (DE)
(72) Erfinder: Minatti, Johann, 80935 München (DE); Clausen-Schaumann, Andreas, 82347 Bernried (DE)

(57) **Zusammenfassung**

Schiebedachanordnung an einem Personenkraftwagen (1), wobei ein durchsichtiges Deckelteil (6) zumindest teilweise über die Außenseite der Heckscheibe (2) verschiebbar ist. Das in Längsrichtung des Personenkraftwagens (1) gekrümmt ausgebildete Deckelteil (6) ist dabei durch die Seitenstruktur (4) des Personenkraftwagens (1) auf einer Kreisbahn verschiebbar geführt . Die Heckscheibe (2) kann zumindest im Bereich der möglichen Überdeckung mit dem Deckelteil gegenüber der Seitenstruktur (4) des Personenkraftwagens (1) abgesenkt fixiert oder absenkbar gelagert sein. In Fahrtrichtung gesehen vor der Heckscheibe (2) ist eine an der linksseitigen und der rechtsseitigen Seitenstruktur (4) des Personenkraftwagens befestigte, sich im wesentlichen in Querrichtung desselben erstreckende Querstrebe (7b) vorgesehen.

## Beschreibung

Die Erfindung betrifft eine Schiebedachanordnung an einem Personenkraftwagen, wobei ein durchsichtiges Deckelteil zumindest teilweise mit einer Heckscheibe in Überdeckung bringbar ist. Zum technischen Umfeld wird neben der US 4,801,174 oder der DE 43 41 343 A1 insbesondere auf die DE 93 21 184 U1 verwiesen.

Grundsätzlich ergibt sich für die Insassen eines Personenkraftwagens eine optimale Rundumsicht, wenn das verschiebbare Deckelteil der Schiebedachanordnung durchsichtig ausgebildet ist. In diesen Fällen ist es auch möglich, das verschiebbare Deckelteil bzw. die entsprechende Dachöffnung derart groß zu gestalten, daß dieses Deckelteil im geöffneten Zustand zumindest teilweise mit der Heckscheibe des Personenkraftwagens in Überdeckung gelangt, da dann weiterhin eine freie Sicht durch das Deckelteil sowie durch die Heckscheibe hindurch nach hinten gegeben ist. Bei dem aus der DE 93 21 184 U1 bekannten Stand der Technik ist das Deckelteil dabei unter die Heckscheibe des Personenkraftwagens verschiebbar, d. h. quasi in den Innenraum des Personenkraftwagens hinein. Hierdurch wird jedoch die Kopffreiheit für die Fondpassagiere des Personenkraftwagens deutlich eingeschränkt. Ferner ergeben sich große Verschmutzungsprobleme, da ein außen verschmutztes Deckelteil wie soeben erwähnt im Innenraum des Personenkraftwagens quasi abgelegt wird. Erforderlich ist weiterhin ein aufwendiges und mitfahrendes Wassermanagement, d. h. es muß dafür Sorge getragen werden, daß durch ein außenseitig nasses Deckelteil kein Wasser in den Innenraum des Personenkraftwagens, so beispielsweise auf die Rücksitzbank bzw. die dort sitzenden Passagiere gebracht wird. Benötigt wird des weiteren ein aufwendiges Mechaniksystem, da das Deckelteil aus seiner geschlossenen Position zunächst nach innen abgesenkt werden muß, ehe es in seine Offenposition gefahren werden kann.

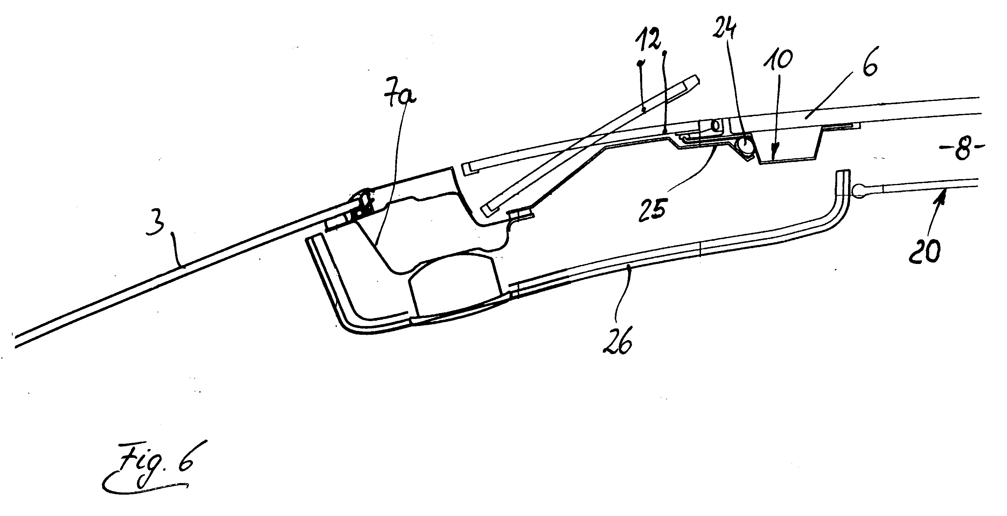

In der US 4,801,174 ist eine Schiebedachanordnung gezeigt, bei welcher das durchsichtige Deckelteil über der Heckscheibe des Personenkraftwagens ablegbar ist, so daß dort einige der oben genannten Probleme nicht auftreten. Jedoch ist auch hier ein relativ aufwendiges Mechaniksystem erforderlich, da bei diesem bekannten Stand der Technik das Deckelteil mit seiner Hinterkante angehoben werden muß. Ferner läßt die Steifigkeit des dort in den Figuren 7 bis 9 gezeigten Personenkraftwagens zu wünschen übrig.
Schließlich ist in der DE 43 41 343 A1 eine Schiebedachanordnung gezeigt, bei der das Deckelteil auf nicht näher erläuterte Weise über die Heckscheibe verfahren werden kann, jedoch genügt die dort lediglich abstrakt gezeigte Karosseriestruktur des Personenkraftwagens keinesfalls den üblichen Festigkeits- bzw. Steifigkeitsanforderungen.

Eine demgegenüber verbesserte Schiebedachanordnung nach dem Oberbegriff des Anspruchs 1 aufzuzeigen, ist daher Aufgabe der vorliegenden Erfindung.
Die Lösung dieser Aufgabe ist dadurch gekennzeichnet, daß das in Längsrichtung des Personenkraftwagens gekrümmt ausgebildete Deckelteil durch die Seitenstruktur des Personenkraftwagens auf einer im wesentlichen kreissegmentförmigen Kurvenbahn geführt über die Außenseite der Heckscheibe verschiebbar ist, wobei in Fahrtrichtung gesehen vor der Heckscheibe eine an der linksseitigen und der rechtsseitigen Seitenstruktur des Personenkraftwagens befestigte, sich im wesentlichen in Querrichtung desselben erstreckende Querstrebe vorgesehen ist. Bei der im wesentlichen kreissegmentförmigen Kurvenbahn handelt es sich bevorzugt um einen Abschnitt einer Kreisbahn, wobei die Krümmung des Deckelteiles dieser Kurvenbahn oder Kreisbahn (im folgenden werden diese Begriffe nebeneinander verwendet) angepasst ist. Vorteilhafte Aus- und Weiterbildungen der Erfindung sind Inhalt der Unteransprüche.

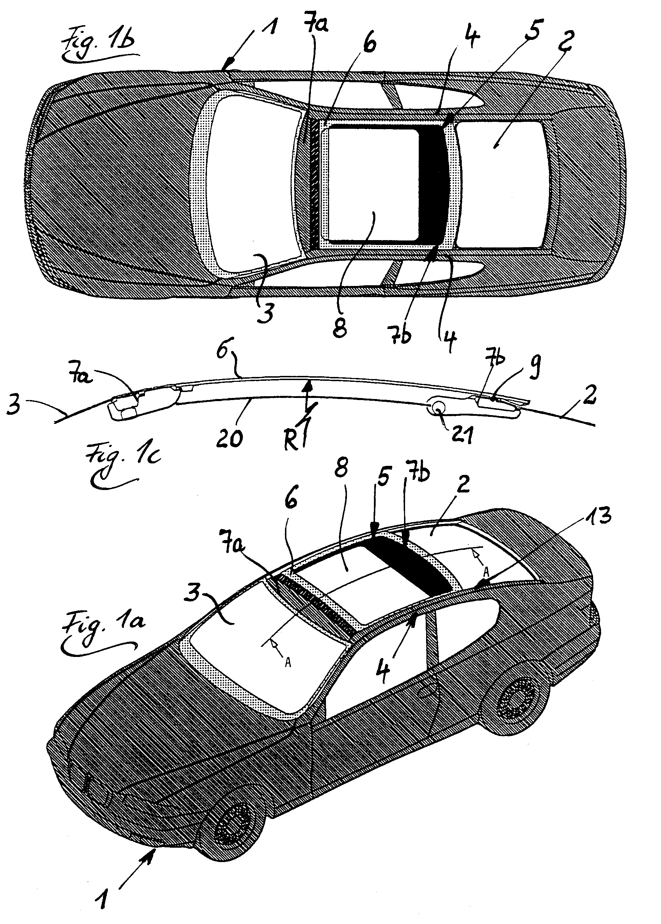

Näher erläutert wird die Erfindung anhand eines bevorzugten Ausführungsbeispieles. Erfindungswesentlich können alle näher bezeichneten Merkmale sein.
Dabei zeigt Figur 1a die Perspektivansicht eines Personenkraftwagens mit einer erfindungsgemäßen Schiebedachanordnung, Figur 1b die Aufsicht auf denselben und Figur 1c den Schnitt A-A aus Figur 1a, wobei sich das Deckelteil jeweils in seiner geschlossenen Position befindet.
Die Figuren 2a bis 2c zeigen die entsprechende Figurenfolge jeweils bei vollständig geöffnetem Deckelteil und die Figuren 3a bis 3c die entsprechende Figurenfolge jeweils in einer Zwischenstellung des Deckelteils zur Belüftung des Wageninnenraumes.
In Figur 4 ist ein Teil-Querschnitt im Heckscheibenbereich des Personenkraftwagens mit über der Heckscheibe liegendem (geöffnetem) Deckelteil dargestellt.
Figur 5 zeigt vergrößert den Schnitt A-A aus Fig. 1a im Übergangsbereich zwischen Deckelteil und Heckscheibe und Figur 6 zeigt vergrößert diesen Schnitt A-A aus Fig. 1a im Übergangsbereich zwischen dem Deckelteil und der Frontscheibe des Personenkraffwagens.

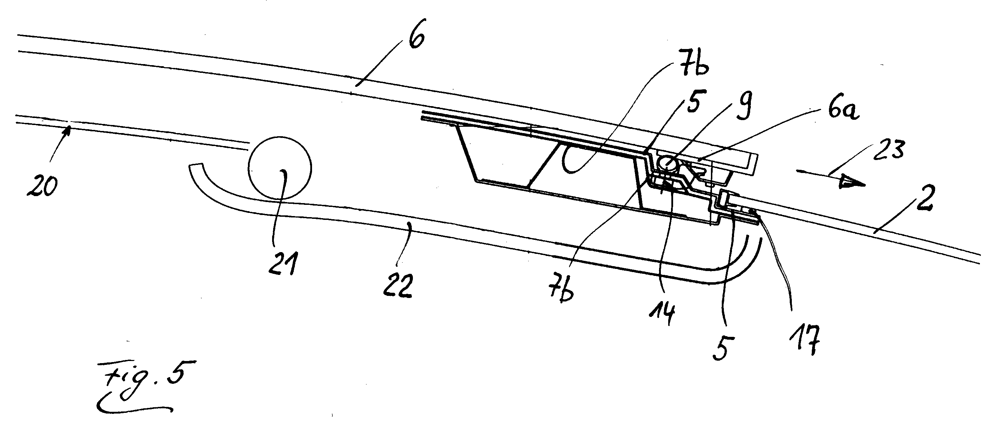

Der in seiner Gesamtheit mit 1 bezeichnete Personenkraftwagen besitzt wie üblich eine Heckscheibe 2 sowie eine Frontscheibe 3, die sich jeweils zwischen der linksseitigen und der rechtsseitigen sogenannten Seitenstruktur 4 des Personenkraftwagens 1 befinden. Im Dachbereich des Personenkraftwagens 1 ist eine sogenannte Trägerstruktur 5 (diese ist in den Figurenfolgen 1, 2, 3 vollständig schwarz dargestellt) vorgesehen, in der ein durchsichtiges Deckelteil 6, dessen Rand in den Figurenfolgen 1, 2, 3 punktiert dargestellt ist, verschiebbar gelagert ist. Diese Trägerstruktur 5 ist an der Karosserie des Personenkraftwagens 1 befestigt, d. h. unter anderem an den beiden Seitenstrukturen 4 sowie an der die beiden Seitenstrukturen 4 verbindenden, oberhalb der Frontscheibe 3 liegenden vorderen Querstrebe 7a, sowie an einer in Fahrtrichtung gesehen vor der Heckscheibe 2 liegenden und ebenfalls an der linksseitigen und an der rechtsseitigen Seitenstruktur 4 befestigten hinteren Querstrebe 7b, welche lediglich in den Figuren 1c, 2c, 3c sowie in Fig. 5 sichtbar ist, da diese Querstrebe 7b unterhalb des in Fahrtrichtung des Personenkraftwagens gesehen hinteren Randes der Trägerstruktur 5 liegt.

Wie bereits erwähnt, ist das Deckelteil 6 in der Trägerstruktur 5 verschiebbar gelagert. Da die Trägerstruktur 5 andererseits an der Seitenstruktur 4 befestigt ist, ist das Deckelteil 6 somit durch die Seitenstruktur 4 des Personenkrattwagens 1 geführt, und zwar auf einer im wesentlichen kreissegmentförmigen Kurvenbahn, wobei das Deckelteil 6 in Längsrichtung des Personenkraftwagens 1 gekrümmt ausgebildet ist, mit eine derartigen Krümmung, daß das Deckelteil 6 entlang dieser besagten kreisförmigen Kurvenbahn bzw. Kreisbahn verschiebbar ist.

In den Figuren 1a bis 1c ist das Deckelteil 6 in der geschlossenen Position dargestellt, d. h. in der die sogenannte Dachluke 8 verschließenden Position. Die Dachluke 8 ist dabei in der Trägerstruktur 5 vorgesehen und wird im wesentlichen durch die beiden Querstreben 7a, 7b sowie die beiden Seitenstrukturen 4 des Personenkraftwagens 1 begrenzt. In den Figuren 1c und 5 erkennt man, daß sich das Deckelteil 6 in der geschlossenen Position unter Zwischenlage einer Dichtung 9 indirekt auf der hinteren Strebe 7b abstützt, und zwar unter Zwischenschaltung der Trägerstruktur 5.

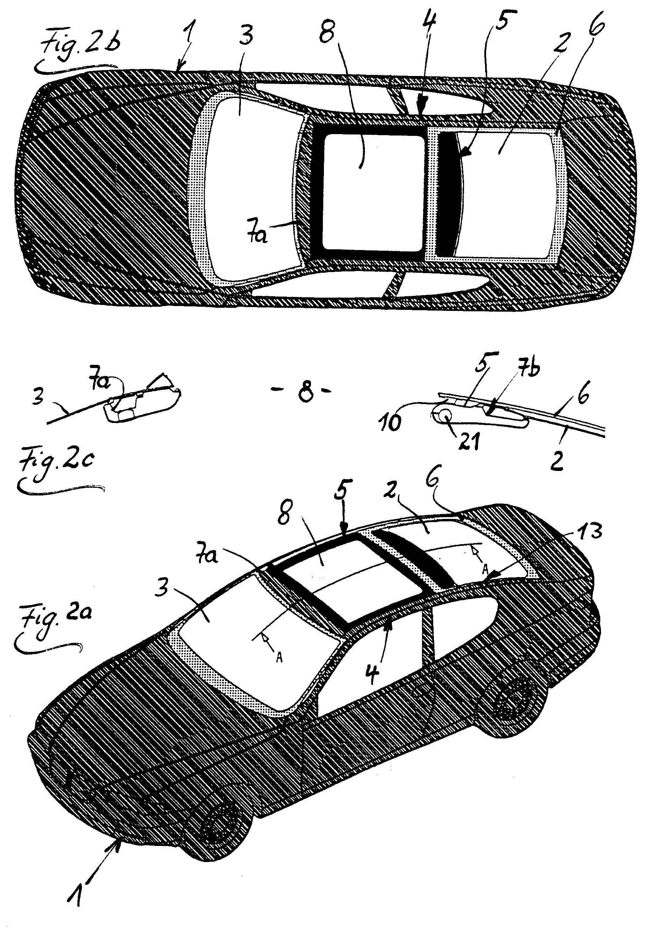

Die Figurenfolge 2a bis 2c zeigt den Personenkraftwagen 1 mit geöffneter Dachluke 8, d. h. das Deckelteil 6 ist soweit nach hinten verfahren, daß es im wesentlichen vollflächig die Heckscheibe 2 überdeckt. Nachdem das Deckelteil 6 -wie bereits erwähnt- durchsichtig ist, d. h. bevorzugt aus einem geeigneten Glas besteht, ist dabei weiterhin eine freie Sicht nach hinten gewährleistet. Wie Figur 2c zeigt, stützt sich auch in dieser vollständig geöffneten Position das Deckelteil 6 über eine längs seiner Vorderkante verlaufende Dichtleiste 10 unter Zwischenschaltung der Trägerstruktur 5 an der hinteren Querstrebe 7b ab.

In diesem Zusammenhang sei auf die besonderen Vorteile nicht nur der Querstrebe 7b, sondern der gesamten Schiebedachanordnung hingewiesen: Die Querstrebe 7b verleiht nämlich der Karosserie des Personenkraftwagens 1 nicht nur die erforderliche Steifigkeit, indem sie die linke Seitenstruktur 4 mit der rechten Seitenstruktur 4 verbindet bzw. ein Abstützglied für diese beiden Seitenstrukturen 4 gegeneinander darstellt. Vielmehr werden durch diese hintere Querstrebe 7b auch die Fahr- bzw. Windgeräusche bei geöffneter Dachluke 8 deutlich reduziert. Dies gilt insbesondere dann, wenn sich das Deckelteil 6 in seiner vollständig geöffneten Position gemäß der Figurenfolge 2a bis 2c befindet, da hierbei die Dichtleiste 10 des Deckelteiles 6 unter Zwischenschaltung der Trägerstruktur 5 auf dieser Querstrebe 7b aufliegt, so daß eine nach vorne hin geschlossene Struktur geschaffen ist, in welche keine Luftströme eintreten und hierdurch unerwünschte Wind- oder Pfeifgeräusche erzeugen können.
Indem ferner an den Seiten des Personenkraftwagens 1 die sich von unten bis zum Dach bzw. bis zur Dachluke 8 erstreckenden sog. Seitenstrukturen 4 vorgesehen sind, in oder an welchen wie angegeben das verschiebbare Deckelteil 6 direkt oder wie hier indirekt geführt ist, liegt eine äußert verwindungssteife Sicherheitszelle für den Personenkraftwagen 1 vor.

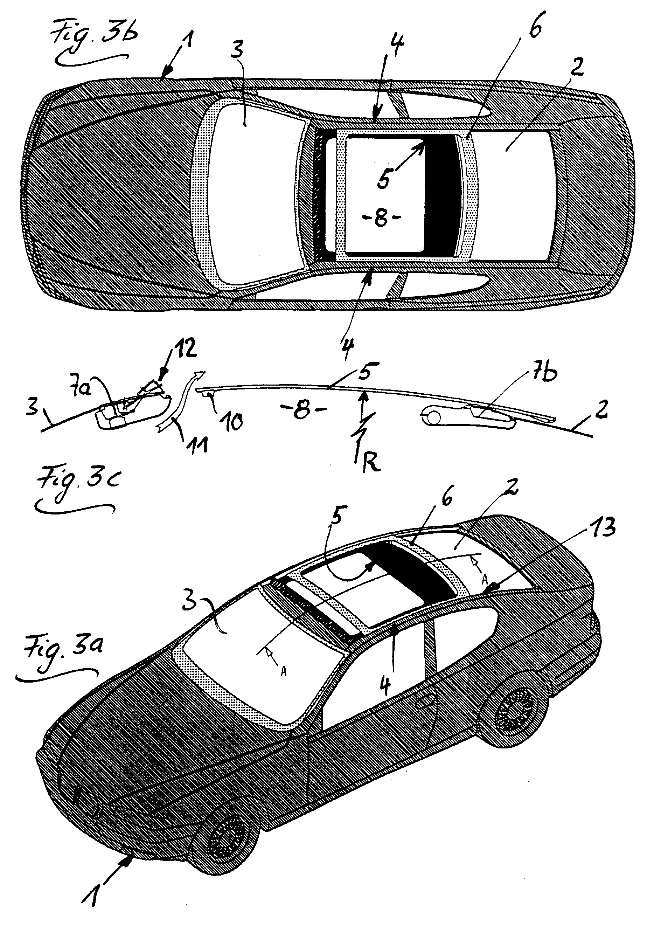

Eine Zwischenposition des Deckelteiles 6 mit nur teilweise geöffneter Dachluke 8 ist in der Figurenfolge 3a bis 3c dargestellt. Ein Pfeil 11 verdeutlicht in Figur 3c eine Luftströmung, die durch die teilweise offene Dachluke 8 entweichen kann. Auf den im vorderen Bereich, d. h. hinter der vorderen Querstrebe 7a vorgesehenen Windabweiser 12 wird an späterer Stelle noch näher eingegangen.

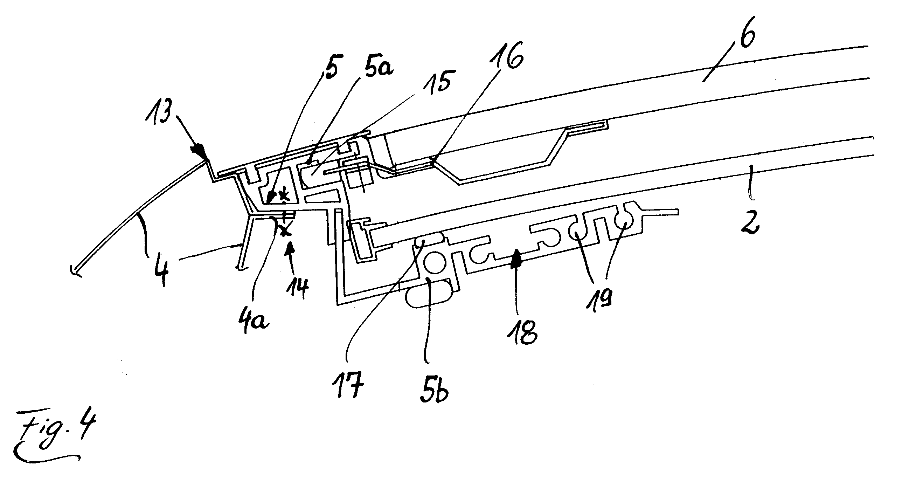

Hier nun soll die Verschiebung des Deckelteiles 6 längs einer im wesentlichen kreissegmentförmigen Kurvenbahn erläutert werden. Durch Vergleich der Figuren 3c mit den Figuren 1c sowie 2c erkennt man, daß das Deckelteil 6, das in Längsrichtung des Personenkraftwagens gekrümmt ausgebildet ist, wobei der Krümmungsradius durch den geschnittenen Pfeil R gekennzeichnet ist, einfach längs einer im wesentlichen kreissegmentförmigen Kurvenbahn verschoben wird, deren Radius ebenfalls vom Betrag R ist. Das Deckelteil 6 kann somit auf einfache Weise über die Heckscheibe 2 hinweggleiten, nachdem diese zumindest im Bereich der möglichen Überdeckung mit dem Deckelteil 6 gegenüber der Oberkante 13 der Seitenstruktur 4 (vgl. auch Fig. 4) abgesenkt fixiert ist. Es ist somit für das Verschieben des Deckelteiles 6 nicht erforderlich, dieses in irgendeiner Weise anzuheben oder abzusenken. Vielmehr genügt eine einfache Verschiebebewegung auf der durch die Trägerstruktur 5 bzw. - da die Trägerstruktur 5 an der Seitenstruktur 4 befestigt ist- durch die Seitenstruktur 4 vorgegebenen im wesentlichen kreissegmentförmigen Kurvenbahn. Längs dieser Kurvenbahn/Kreisbahn ist das Deckelteil 6 mit seinen Seitenkanten somit durch die Seitenstruktur 4 geführt, und zwar bevorzugt indirekt, wie aus der im folgenden erläuterten Figur 4 hervorgeht.

In Figur 4, die einen Teil-Querschnitt durch den Personenkraftwagen 1 im Bereich der Heckscheibe 2 mit darüberliegendem (und somit zumindest teilweise geöffnetem) Deckelteil 6 zeigt, erkennt man die Seitenstruktur 4 sowie deren Oberkante 13. Auf einem Flansch 4a der Seitenstruktur 4 ist die Trägerstruktur 5 gelagert, wobei hier auch eine geeignete Befestigung, beispielsweise über ein symbolisch dargestellte Schraubverbindung 14, vorgesehen sein kann. Ein Bestandteil der Trägerstruktur 5 ist eine U-förmige Führungsschiene 5a, in welcher verschiebbar ein Gleitelement 15 eingesetzt ist, welches über einen Haltebügel 16 das Deckelteil 6 trägt. Das Gleitelement 15 kann sich über die gesamte Länge des Deckelteiles 6 erstrecken, es können jedoch auch mehrere Gleitelemente 15 mit separaten Haltebügeln 16 vorgesehen sein. Selbstverständlich befinden sich an der rechtsseitigen Kante des Deckelteiles 6 (in Figur 4 ist lediglich die linksseitige Hälfte des Personenkraftwagens 1 dargestellt) ebenfalls derartige Gleitelemente 15 und Haltebügel 16.

In Figur 4 erkennt man auch, wie die Heckscheibe 2 gegenüber der Oberkante 13 der Seitenstruktur 4 abgesenkt fixiert ist. Dies ist - wie bereits erläutert - erforderlich, damit das Deckelteil 6 auf der kreisförmigen Kurvenbahn fahrend über der Heckscheibe 2 positioniert werden kann. Zurückkommend auf die Fixierung der Heckscheibe 2 sei auf die Kleberaupe 17 hingewiesen, die auf einem sogenannten Antriebskanalteil 5b der Trägerstruktur 5 aufgebracht ist. Dieses ein Bestandteil der Trägerstruktur 5 bildende Antriebskanalteil 5b enthält einen sogenannten Antriebskanal 18, in welchem nicht gezeigte Seilzüge zur Verschiebung des Deckelteiles 6 geführt sind.

In diesem sogenannten Antriebskanalteil 5b, welches zum Wageninnenraum hin als Abdeckung fungiert, sind weiterhin Antriebskanäle 19 für ein Rollo 20 (vgl. Fig. 1c, 5, 6) vorgesehen, mit welchem zumindest das geschlossene Deckelteil 6 abdeckbar ist. Hierzu ist das Rollo 20 von einer sich quer zu Längsrichtung des Personenkraftwagens 1 erstreckenden Rolle 21 (vgl. Fig. 1c, 5) in Längsrichtung des Pkws 1 ausziehbar bzw. bevorzugt im Falle der geöffneten Dachluke 8 auf dieser Rolle 21 aufwickelbar.

In Figur 5, welche einen Längsschnitt durch das Dach des Personenkraftwagens 1 im Übergangsbereich zwischen geschlossenem Deckelteil 6 und Heckscheibe 2 zeigt, ist ebenfalls diese Rolle 21 sowie das Rollo 20 dargestellt, wobei ferner eine Abdeckung 22, die an der Trägerstruktur 5 befestigt sein kann, vorgesehen ist. Diese Abdeckung 22 verdeckt dabei nicht nur die Rolle 21, sondern auch die hintere Querstrebe 7b zum Wageninnenraum hin.
Figur 5 zeigt im übrigen ebenfalls, wie die Scheibe 2 über eine Kleberaupe 17 mit der Trägerstruktur 5 verbunden ist, wobei letztere - wie bereits erläutert - auf der hinteren Querstrebe 7b aufliegt und eine symbolisch dargestellte Schraubverbindung 14 zwischen der Trägerstruktur 5 und der hinteren Querstrebe 7b vorgesehen ist.

Kurz eingegangen wurde ebenfalls bereits auf die Dichtung 9, auf welcher das Deckelteil 6 im geschlossenen Zustand mit einem zur Dichtung 9 hin erhöhten Absatz 6a aufliegt. Sobald das Deckelteil 6 geringfügig gemäß Pfeilrichtung 23 in Richtung der Offenposition verschoben wurde, ist dieser Absatz 6a von der Dichtung 9 abgeglitten, so daß ein lichter Spalt zwischen Dichtung 9 und Deckelteil 6 vorliegt, was vorteilhaft ist, um das Deckelteil 6 bei möglichst geringfügiger mechanischer Beanspruchung der Dichtung 9 weiter in bzw. gegen Pfeilrichtung 23 verfahren zu können. Befindet sich dann schließlich das Deckelteil 6 in einer die Dachluke 8 vollständig freigebenden Position, so ist die bereits erläuterte Abdichtung durch die Dichtleiste 10 gegeben (vgl. Figur 2c).

In Figur 6, welche einen Längsschnitt im vorderen Bereich des geschlossenen Deckelteiles 6 zeigt, ist unter anderem diese Dichtleiste 10 ( gegenüber Fig. 2c vergrößert) dargestellt. Man erkennt, daß diese Dichtleiste 10 im geschlossenen Zustand des Deckelteiles 6 unter Zwischenlage eines Dichtelementes 24 an einem an der vorderen Querstrebe 7a befestigten Stegblech 25 zum Anliegen kommt, um dann eine optimale Abdichtung des Wageninnenraumes gegenüber der Umgebung zu erzielen. Dieses Stegblech 25 ist dabei derart geformt, daß es den bereits erwähnten Windabweiser 12 aufnehmen kann, und zwar sowohl in dessen versenkter als auch in dessen herausgeschwenkter Position (beide sind gezeigt). Die entsprechende Betätigungsvorrichtung des Windabweisers 12 für dessen Verschwenkbewegung ist dabei nicht dargestellt, kann jedoch in einer dem Fachmann bekannten Weise vorgesehen sein. Im übrigen erkennt man in dieser Figur 5 auch das die Dachluke 8 abdeckende Rollo 20 sowie eine weitere Abdeckung 26 für den sich an die Dachluke 8 anschließenden vorderen Bereich, insbesondere auch für die vordere Querstrebe 7a.

Es sei noch darauf hingewiesen, daß selbstverständlich dies sowie eine Vielzahl weiterer Details insbesondere konstruktiver Art durchaus abweichend vom gezeigten Ausführungsbeispiel gestaltet sein kann, ohne den Inhalt der Patentansprüche zu verlassen. So ist es insbesondere auch möglich, abweichend von der hier gezeigten Ausführungsform, wonach die Heckscheibe 2 gegenüber der Oberkante 13 der Seitenstruktur 4 abgesenkt fixiert ist, die Heckscheibe 2 auch absenkbar, d.h. beweglich auszubilden bzw. zu lagern. Bei dieser Gestaltung könnte sich, abweichend von der Darstellung nach Figur 5, dann, wenn sich das Deckelteil 6 in der die Dachluke 8 verschließenden Position befindet, die in Fahrtrichtung gesehen vordere Kante der Heckscheibe 2 im wesentlichen flächenbündig an die hintere Kante des Deckelteils 6 anschließen. Um dann das Deckelteil 6 erfindungsgemäß auf einer im wesentlichen kreissegmentförmigen Kurvenbahn in seine offene Position verschieben zu können, muß jedoch vorher die Heckscheibe 2 gegenüber der Oberkante 13 der Seitenstruktur 4 abgesenkt werden.

Stets erhält man mit den beschriebenen Maßnahmen einen einfachen Betätigungs- bzw. Bewegungsmechanismus für das Deckelteil 6, wobei durch die quasi geschlossene Seitenstruktur 4 und auch aufgrund der hinteren Querstrebe 7b einerseits eine stabile Struktur der Karosserie des Personenkraftwagens 1 insbesondere im Hinblick auf Biegung und Torsion gewährleistet ist und andererseits eine Optimierung im Hinblick auf die Fahr- bzw. Windgeräusche gegeben ist.

## Patentansprüche

1. Schiebedachanordnung an einem Personenkraftwagen (1), wobei ein durchsichtiges Deckelteil (6) zumindest teilweise mit einer Heckscheibe (2) in Überdeckung bringbar ist,
dadurch gekennzeichnet, daß das in Längsrichtung des Personenkraftwagens (1) gekrümmt ausgebildete Deckelteil (6) durch die Seitenstruktur (4) des Personenkraftwagens (1) auf einer im wesentlichen kreissegmentförmigen Kurvenbahn geführt über die Außenseite der Heckscheibe (2) verschiebbar ist, wobei in Fahrtrichtung gesehen vor der Heckscheibe (2) eine an der linksseitigen und der rechtsseitigen Seitenstruktur (4) des Personenkraftwagens (1) befestigte, sich im wesentlichen in Querrichtung desselben erstreckende Querstrebe (7b) vorgesehen ist.

2. Schiebedachanordnung nach Anspruch 1,
dadurch gekennzeichnet, daß die Heckscheibe (2) zumindest im Bereich der möglichen Überdeckung mit dem Deckelteil (6) gegenüber der Oberkante (13) der Seitenstruktur (4) des Personenkraffwagens (1) abgesenkt fixiert oder absenkbar gelagert ist.

3. Schiebedachanordnung nach nach Anspruch 1 oder 2,
dadurch gekennzeichnet, daß das Deckelteil (6) über Gleitelemente (15) in einer Trägerstruktur (5) verschiebbar gelagert ist, welche an der Karosserie des Personenkraftwagens (1) befestigt und mit Abdeckungen (22) und Antriebskanalteilen (5b) für die Verschiebung des Deckelteiles (6) versehen ist.

4. Schiebedachanordnung nach einem der vorangegangenen Ansprüche,
dadurch gekennzeichnet, daß innenraumseitig ein insbesondere in der Trägerstruktur (5) gelagertes Rollo (20) vorgesehen ist, mit welchem zumindest das geschlossene Deckelteil (6) abdeckbar ist.
